Europäisches Patentamt

European Patent Office

Office européen des brevets

(19)

(11) **EP 0 917 902 B1**

(12) **EUROPEAN PATENT SPECIFICATION**

(45) Date of publication and mention
of the grant of the patent:
**22.12.2004 Bulletin 2004/52**

(51) Int Cl.7: **B01D 39/08**, B01D 39/16,
B01D 46/12, B32B 27/00,
B32B 27/30

(21) Application number: **97934723.4**

(22) Date of filing: **06.08.1997**

(86) International application number:
**PCT/JP1997/002754**

(87) International publication number:
**WO 1998/006477 (19.02.1998 Gazette 1998/07)**

(54) **FILTER MEDIUM AND AIR FILTER UNIT**

FILTERMEDIUM UND LUFTFILTEREINHEIT

MILIEU FILTRANT ET FILTRE A AIR

(84) Designated Contracting States:
**AT BE CH DE DK ES FI FR GB GR IE IT LI NL PT SE**

(30) Priority: **09.08.1996 JP 21163696**
**04.02.1997 JP 2152297**

(43) Date of publication of application:
**26.05.1999 Bulletin 1999/21**

(73) Proprietor: **DAIKIN INDUSTRIES, LIMITED**
**Osaka-shi Osaka 530 (JP)**

(72) Inventors:
• **INOUE, Osamu.,Yodogawa-seisakusho**
**Settsu-shi, Osaka 566 (JP)**
• **CHAEN, Shinichi, Yodogawa-seisakusho**
**Settsu-shi, Osaka 566 (JP)**
• **URAOKA, Nobuki, Yodogawa-seisakusho**
**Settsu-shi, Osaka 566 (JP)**
• **KUSUMI, Toshio.,Yodogawa-seisakusho**
**Settsu-shi, Osaka 566 (JP)**
• **ASANO, Jun, Yodogawa-seisakusho**
**Settsu-shi, Osaka 566 (JP)**
• **HIRANO, Seiichi, Yodogawa-seisakusho**
**Settsu-shi, Osaka 566 (JP)**
• **HARA, Satoshi, Yodogawa-seisakusho**
**Settsu-shi, Osaka 566 (JP)**

(74) Representative: **HOFFMANN EITLE**
**Patent- und Rechtsanwälte**
**Arabellastrasse 4**
**81925 München (DE)**

(56) References cited:
EP-A- 0 707 033          WO-A-96/02313
WO-A-96/09879          JP-A- 3 068 409
JP-A- 5 184 844          JP-A- 5 504 717
JP-A- 7 506 532          JP-A- 8 325 890
JP-A- 51 134 475

**Description**

Technical field

This invention relates to a filter medium used for cleaning air, for example in a clean room, and an air filter unit using the same. More specifically, this invention relates to a filter medium used for cleaning air in manufacturing electronic members such as semiconductors and liquid crystals, and an air filter unit using the same.

Background Art

As filters used for cleaning air in a clean room, the inventors of this invention have already disclosed a polytetrafluoroethylene (referred to as PTFE hereinafter) porous film (for example, Japanese Patent Application Tokkai Hei 5-202217). In addition, the lamination of a thermoplastic material such as a span bond nonwoven fabric of sheath-core structured filaments onto both the surfaces of the PTFE porous film was also proposed so as to protect the porous film from scratches and pin holes (Japanese Patent Application Tokkai Hei 6-218899).

However, the filter media disclosed in Tokkai Hei 5-202217 and Tokkai Hei 6-218899 generates a little total organic carbon (mentioned as TOC hereinafter) when used e.g. as an air filter in a clean room. The TOC mentioned above means the total of gaseous organic materials such as dodecane, tridecane, butylhydroxytoluene (BHT), phosphate, organic phosphate, dioctylphthalate, siloxane, etc. The generation of TOC in a cleaned air space such as a clean room may lead to deterioration in the quality in manufacturing semiconductors, liquid crystals, etc.

WO 96/02313 A discloses a high temperature chemical resistant filtration laminate formed from an expanded polytetrafluoroethylene membrane material and a coated metal mesh material. The laminate is self-supporting and can be formed into a pleated filter member.

EP 0 707 033 A discloses a PTFE porous composite film which is obtained by stretching a composite along its width direction which composite is composed of at least two overlapped films longitudinally stretched at a temperature not higher than a melting point of sintered PTFE material, each film being obtained paste-extruding and semi-sintering thereafter of PTFE produced by emulsion polymerization.

WO 96/09879 A discloses a composite structure comprising a porous medium, a substrate provided with at least one drainage pathway, and a support and drainage medium sandwiched between the porous medium and the substrate. The porous medium, the support and drainage medium and the substrate are bonded free of any adhesive.

Disclosure of Invention

This invention is intended to solve the above-mentioned conventional problems by providing a filter medium that generates almost no organic materials and has a PTFE porous film with air cleaning properties, and an air filter unit using the same.

In order to achieve the above purposes, the filter medium of this invention has at least one of the following (1)-(4) characteristics:

(1) The maximum amount of organic materials detected from the filter medium is 3ng or less per gram of the filter medium. The detected maximum amount of organic materials is more preferably 2ng or less, or further preferably 1ng or less, per gram of the filter medium. The above-noted organic materials mentioned in this invention are not TOC but various detected individual organic materials.

(2) The filter medium has an air permeable supporting material on at least one surface of a polytetrafluoroethylene porous film, and the total amount of organic materials detected from the air permeable supporting material at 80°C (by the analytical method mentioned below) is 1000ng or less, more preferably 500ng or less, or further preferably 150ng or less, per 250mg of the air permeable supporting material.

(3) The filter medium has an air permeable supporting material having a high temperature pressure endurance of 0-15.0 on at least one surface of a polytetrafluoroethylene porous film. It was found that little TOC was generated with a small high temperature pressure endurance. The air permeable supporting material of this invention has 0-15, more preferably 0-8.0, or further preferably 0-5.0, high temperature pressure endurance as measured by the method defined below. This mechanism cannot be totally explained, but it is thought that a material has a small heat deterioration and thermal deformation when it has a high temperature pressure endurance of low value, so that it is difficult for impurities (TOC) to be generated from the air permeable supporting material itself.

(4) The filter medium has an air permeable supporting material on at least one surface of a polytetrafluoroethylene porous film, and the air permeable supporting material is essentially made of at least one material selected from the group consisting of polyester and polyamide. "Essentially made of polyester and polyamide" mentioned above indicates that the material is mostly made of polyester and polyamide, and contains no materials such as polyolefin - which can cause the generation of organic materials from the air permeable supporting material - and contains no additives that can volatilize under the atomosphere in which the air filter unit is used in the manufacturing process of the air permeable supporting material. It is more preferable if the supporting material is essentially made of polyester. It is further preferable if the supporting material is made of at least one polymer selected from the group consisting of polyethylene terephthalate and polybutylene terephthalate.

The air filter element of this invention is formed into a pleated shape using the filter medium of this invention. The air filter is formed into a pleated shape using, for instance, the filter medium of (1), (2), (3) or (4) mentioned above.

The air filter unit of this invention contains an air filter medium that has an air permeable supporting material on at least one surface of a polytetrafluoroethylene (PTFE) porous film; the filter medium is bent in a wave form and is in a supporting body (frame) with the periphery sealed. The filter medium is one of this invention (for example, the filter medium of the above-mentioned (1), (2), (3) or (4)).

Brief Description of Drawings

Fig. 1 is a cross-sectional view of a filter medium of one embodiment of the present invention.
Fig. 2 is a perspective view of an air filter unit of one embodiment of the present invention.
Fig. 3 is a cross-sectional view of a spacer shown in Fig. 2.
Fig. 4A is a front of view of a supporting frame of Standard of Test Method for Combustion of Air Filter Media (JACA No. 11-1977).
Fig. 4B is a plan of view of a supporting frame of Standard of Test Method for Combustion of Air Filter Media (JACA No. 11-1977).
Fig. 5 is a plan of view of a Metal Frame of Standard of Test Method for Combustion of Air Filter Media (JACA No. 11-1977).
Fig. 6 illustrates a Testing Process of a Metal Frame of Standard of Test Method for Combustion of Air Filter Media (JACA No. 11-1977).

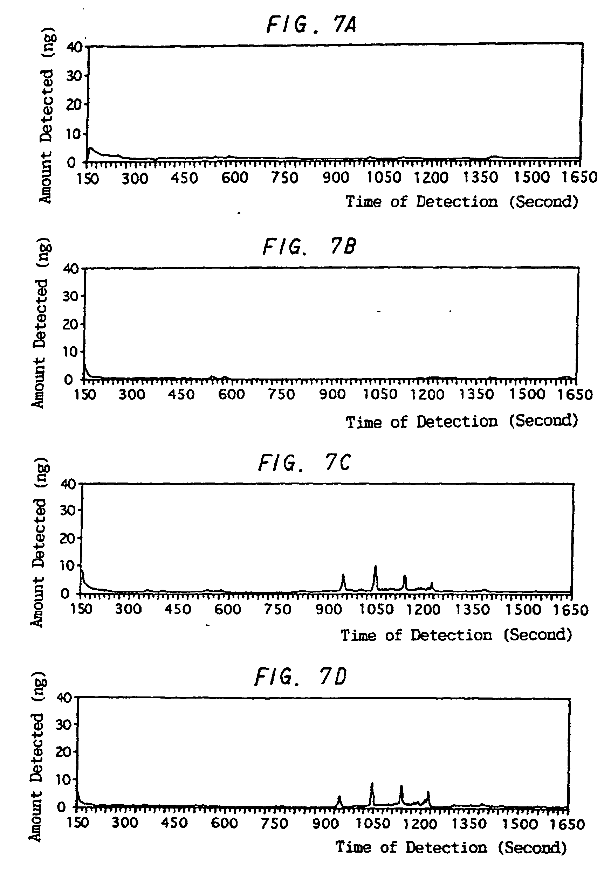

Fig. 7A is a GC-MS analytical chart of Example 1 of this invention; Fig. 7B is a GC-MS analytical chart of Example 2 of this invention; Fig. 7C is a GC-MS analytical chart of Comparative Example 1; and Fig. 7D is a GC-MS analytical chart of Comparative Example 2.

Best Mode for Carrying Out the Invention

The properties of the filter medium of this invention are explained in further detail.

(1) It is preferable that the maximum amount of organic materials detected from the filter medium is 3ng or less per gram of the filter medium. The filter medium also has an air permeable supporting material on at least one surface of a polytetrafluoroethylene porous film, and the maximum amount of organic materials detected from the filter medium is preferably 3ng or less per gram of the filter medium. It is further preferable that the air permeable supporting material is essentially at least one material selected from the group consisting of polyester and polyamide.

(2) The filter medium of this invention has an air permeable supporting material on at least one surface of a polytetrafluoroethylene porous film, and the amount of organic materials detected from the air permeable supporting material at 80°C (by the measurement method defined below) is preferably 1000ng or less (the lower limit is a detection limit value, and is preferably zero) per 250mg of the air permeable supporting material. It is also preferable that the air permeable supporting material is essentially made of at least one material selected from the group consisting of polyester and polyamide, or particularly is essentially made of a polyester material. Furthermore, the air permeable supporting material has a high temperature pressure endurance of 0-15.0, more preferably 0-8.0, or further preferably 0-5.0, which is measured by the method mentioned below.

(3) The filter medium has an air permeable supporting material on at least one surface of a polytetrafluoroethylene porous film, and the air permeable supporting material preferably has a high temperature pressure endurance of 0-15.0. It was found that there is little generation of TOC when the high temperature pressure endurance is low. The air permeable supporting material of this invention has a high temperature pressure endurance of 0-15.0, more preferably 0-8.0, or further preferably 0-5.0, which is measured by the method defined below. It is preferable that the air permeable supporting material is essentially made of at least one material selected from the group consisting of polyester and polyamide, or particularly is essentially made of a polyester material.

(4) The filter medium has an air permeable supporting material on at least one surface of a polytetrafluoroethylene porous film, and the air permeable supporting material is essentially made of at least one material selected from the group consisting of polyester and polyamide. It is further preferable that the air permeable supporting material is essentially made of a polyester material and contains no polyolefin. In this case, the air permeable supporting material preferably has a high temperature pressure endurance of 0-15.0, more preferably 0-8.0, or further preferably 0-5.0. In other words, it was found that there is little generation of TOC from the supporting material made of polyester or polyamide materials when the high temperature pressure endurance is within the above-noted range.

In the above-mentioned (1), (2), (3) and (4), the properties of the air permeable supporting material essentially made of at least one material selected from the group consisting of polyester and polyamide include: a nonwoven fabric, a woven cloth, a mesh, a porous film, or the like. Among these forms, a nonwoven fabric is most preferable. The nonwoven fabrics include:

(1) filaments: span bond nonwoven fabrics, and melt blown nonwoven fabrics and

(2) short fibers: thermal bond nonwoven fabrics, and wet paper nonwoven fabrics. The filaments span bond nonwoven fabrics are most preferable since little TOC is generated with their use. In manufacturing wet paper PET fiber nonwoven fabrics, an agent such as oil is added. As a result, oil or the like leaks from the material, thus causing generation of impurities (TOC). Thus, the wet paper PET fiber nonwoven fabrics have to be treated (e.g., removal of oil) before they are used. The structures of nonwoven fabrics include a nonwoven fabric of single fibers, a mix spun nonwoven fabric, a nonwoven fabric of sheath-core fibers, a nonwoven fabric of a laminated structure, and the like. Among these structures, the nonwoven fabric made of single fibers is economical and, thus, advantageous. Polyamide includes nylon-6, nylon-6,6, and the like. The examples of polyester are polyethylene terephthalate, polybutylene terephthalate, polyethylene-2, 6, naphthalate, and the like, and it is preferable that the polyester has a melting point of 120°C or above. When the material is only made of polyester (having only one melting point), it has a melting point of 120°C or above, more preferably 180°C or above. If the material has a mix spun structure or a sheath-core structure (having at least two melting points), it has a high melting point of 240-280°C and a low melting point of 120°C or above, more preferably 180°C or above. If the melting point is lower than 120°C, more TOC would be generated.

It is preferable that the air permeable supporting material of the filter medium is practically made of polyester, and contains no polyolefin.

It is also preferable that the polyester material of the filter medium of this invention is at least one polymer selected from the group consisting of polyethylene terephthalate and polybutylene terephthalate.

It is preferable that the polyester material of the filter medium of this invention is a nonwoven fabric made of polyester fibers.

It is also preferable that the nonwoven fabric of the filter medium of this invention is a filament nonwoven fabric.

It is preferable that the filament nonwoven fabric of the filter medium of this invention is a span bond nonwoven fabric.

The filter medium of the invention mentioned as in the above-noted (1), (2), (3) and (4) has an air permeable supporting material on both surfaces of the PTFE porous film.

It is further preferable that the filter medium of the invention and the air permeable supporting material mentioned as in the above-noted (1), (2), (3) and (4) have the characteristics mentioned below.

The PTFE porous film can be one or more layers in the filter medium of this invention. In the filter medium, an air permeable supporting material is applied on one surface of the PTFE porous film, on both surfaces of the porous film, or is alternately or randomly applied altogether with the PTFE porous film.

Particularly, the filter medium in which the supporting material is applied on both surfaces of the porous film is preferable since it can prevent scratches and pin holes from forming on the PTFE porous film.

There is no particular limitation on the PTFE porous film, and a conventional PTFE porous film may be used for the filter medium. A PTFE porous film is especially preferable which can provide particle collection efficiency of floating fine particles and the properties such as pressure loss (the same or better properties than a high efficiency particulate airfilter (HEPA filter) and ultra low penetration airfilter (ULPA filter)) required for a filter unit used in a clean room for manufacturing semiconductors, liquid crystals, etc. and in manufacturing devices. For instance, the pressure loss is preferably 10-100mmH$_2$O when air is permeated at the flow velocity of 5.3cm/second, and the particle collection efficiency of 0.10-0.12 μm dioctylphthalate (DOP) is preferably 99.0% or more. These PTFE porous films are described in Japanese Patent Application Tokkai Hei 5-202217 and WO 94/16802, the disclosures of which are incorporated by reference.

The above-noted PTFE porous films applied in this invention can be easily prepared by a conventional method. The method includes, for example, the steps of extruding a paste of a PTFE fine powder and an extrusion assistant, forming a tape by pressing and spreading the extruded paste, and stretching out the non-baked or semi-baked paste in two axial directions. This method is specifically explained in Japanese Patent Application Tokkai Hei 5-202217, WO 94/16802, etc.

The air permeable supporting material of the film medium is used to reinforce and protect a PTFE drawn porous film. Thus, it becomes easy to handle the filter medium and to process the element into a pleated shape or the like.

It is preferable that the air permeable supporting material has a smaller pressure loss than a PTFE porous film. The air permeable supporting material is in a form of a nonwoven fabric, a woven cloth, a mesh, a porous film, a woven fabric, etc. Among these forms, a nonwoven fabric is most preferable. The air permeable supporting material may be made of fibers, but the fibers preferably have a 1-100 μm average fiber diameter. Furthermore, the air permeable supporting material is made of organic macromolecules, and preferably has a melting point of 300°C or below. In laminating an air permeable supporting material onto a PTFE porous film, it is preferable to adhere it by heat. But if the air permeable supporting material has a melting point above 300°C, the laminating process is carried out above 300°C. As a result, a filter medium with preferable properties may not be provided.

The air permeable supporting material is preferably made of polyester fibers. It is also preferable that the air permeable supporting material is made of polyester fibers and contains no polyolefin. The air permeable supporting material preferably has at least two melting points. The above-noted polyester is polyethylene terephthalate (PET), polybutylene terephthalate (PBT), and the like.

Preferably, the polyester is at least one polymer selected from PET, PBT and copolymers thereof. In other words, it is preferable that the air permeable supporting material of the filter medium of the invention is practically made of at least one resin selected from PET and PBT.

Air permeable supporting materials made of glass fibers such as glass fiber nonwoven fabrics, glass fiber paper and glass fiber air filter media are not preferable since they can help generate boron (B).

The present invention does not generate boron (B) from the filter filament nonwoven fabric.

The polyester fiber material is preferably a nonwoven fabric, particularly a filament nonwoven fabric. In using filaments, a nonwoven fabric is formed when the fibers are molten and spun (spinning direct nonwoven fabric), so that the cloth can be kept in a clean condition from the beginning. Filament nonwoven fabrics are prepared by e.g., span bond method, flash spinning method, and melt blowing method.

Particularly, the span bond method is preferable. The filament span bond nonwoven fabric preferably has a basis weight (weight per unit area) of 10-600g/m$^2$, more preferably 15-300g/m$^2$, or further preferably 15-100g/m$^2$. With more than 100g/m$^2$ basis weight, it becomes difficult to process (for example, fold) a filter medium into a pleated air filter, thus increasing cost.

When short fibers are used to prepare a nonwoven fabric, it is required to pass through a card for opening. In order to maintain the passage, oil has to be added. The nonwoven fabric is used after the oil is removed. The nonwoven fabric is formed from short fibers by the needle punch method, water jet method, stitch bond method, etc.

The polyester fiber nonwoven fabrics include e.g., a PET fiber nonwoven fabric, a PBT fiber nonwoven fabric, a nonwoven fabric of sheath-core fibers which comprise a PET core and a PBT sheath (PET/PBT sheath-core nonwoven fabric), a nonwoven fabric having a sheath-core structure which comprises a high melting point PET (core section) and a low melting point PET (sheath section) (high melting point PET/low melting point PET sheath-core structure nonwoven fabric), a nonwoven fabric of combined fibers of PET and PBT, a nonwoven fabric made of mixed fibers of high melting point PET fibers and low melting point PET fibers, etc.

The above-mentioned low melting point PET is preferably a polyethylene terephthalate copolymer in which isophthalic acid, adipic acid, diethylene glycol, polyethylene glycol, etc. is copolymerized. The high melting point PET and the PET mentioned above preferably comprise terephthalic acid and ethylene glycol and having a melting point of about 260°C. The above-mentioned PBT may be a copolymer in which components other than the ones mentioned above are copolymerized.

The air permeable supporting material of the filter medium mentioned above is preferably a flame-resistant air permeable supporting material. The flame resistance in this invention is based on the Standard of Test Method for Combustion of Air Filter Media (JACA No. 11-1977) prepared by the Filter Standard Committee of JAPAN AIR CLEANING ASSOCIATION (JACA), and is 150mm or less maximum carbonized length.

Flame-resistant properties are added preferably to fibers by copolymerizing. Particularly, polyester fibers, in which an organic phosphorous compound (flame retardant) is copolymerized, can limit the generation of organic materials and phosphor, so that the fibers are a preferable material for a filter medium.

It is preferable that the PTFE porous film and the air permeable supporting material of the filter medium are adhered into one body by melting a section of the supporting material with heat, or adhered by powder such as polyester, tetrafluoroethylene-perfluoroalkylvinylethercopolymer (PFA), etc. or a hot-melt adhesive. The adhering methods are selected in accordance with the kinds of air permeable supporting materials.

The generation of organic materials can be reduced especially when a polyester-based hot melt agent is used.

In a filter medium in which a PBT nonwoven fabric contacts a PTFE porous film, e.g., the above-mentioned PET/PBT sheath-core structure nonwoven fabric, the layers are adhered and laminated into one body by heat from a heat roller. Compared with other polyester resins, PBT can easily be thermally bonded to a PTFE porous film. When thermal adhesion is carried out by e.g., a heat roller, the process of adhering the layers into one body becomes a continous process in manufacturing filter media. Thus, the manufacturing efficiency for the filter media improves.

The following characteristics can be found when a section of an air permeable supporting material is thermally adhered into one body;

(1) (low melting point PET fiber nonwoven fabric): (PTFE porous film): (low melting point PET fiber nonwoven fabric): (high melting point PET fiber nonwoven fabric);

(2) (low melting point PET fiber nonwoven fabric):(PTFE porous film): (high melting point PET/ low melting point PET sheath-core structure nonwoven fabric);

(3) (high melting point PET/low melting point PET sheath-core structure nonwoven fabric):(PTFE porous film): (high melting point PET/low melting point PET sheath-core structure nonwoven fabric);

(4) (nonwoven fabric made of the mixture of high melting point PET fibers and low melting point PET fibers): (PTFE porous film): (nonwoven fabric made of the mixture of high melting point PET fibers and low melting point PET fibers);

(5) (PET/PBT sheath-core structure nonwoven fabric): (PTFE porous film): (PET/PBT sheath-core structure nonwoven fabric);

(6) (PET/PBT sheath-core structure nonwoven fabric): (PTFE porous film): (lower melting point PET nonwoven fabric);

(7) (PET/PBT sheath-core structure nonwoven fabric): (PTFE porous film): (high melting point PET/ low melting point PET sheath-core structure nonwoven fabric);

(8) (low melting point PET fiber nonwoven fabric):(PTFE porous film): (nonwoven fabric of the mixture of high melting point PET fibers and low melting point PET fibers);

(9) (nonwoven fabric of the mixture of high melting point PET fibers and low melting point PET fibers): (PTFE porous film): (low melting point PET fiber nonwoven fabric): (high melting point PET fiber nonwoven fabric);

(10) (nonwoven fabric of the mixture of high melting point PET fibers and low melting point PET fibers): (PTFE porous film): (PET/PBT sheath-core structure nonwoven fabric)

(11) (PET/PBT sheath-core structure nonwoven fabric): (PTFE porous film): (low melting point PET nonwoven fabric): (high melting point PET fiber nonwoven fabric);

(12) (PBT fiber nonwoven fabric): (PTFE porous film): (PBT fiber nonwoven fabric);

(13) (PBT fiber nonwoven fabric): (PTFE porous film): (low melting point PET fiber nonwoven fabric);

(14) (PBT fiber nonwoven fabric):(PTFE porous film): (low melting point PET fiber nonwoven fabric): (high melting point PET fiber nonwoven fabric);

(15) (PBT fiber nonwoven fabric): (PTFE porous film): (high melting point PET/low melting point PET sheath-core structure nonwoven fabric);

(16) (PBT fiber nonwoven fabric): (PTFE porous film):(nonwoven fabric made of the mixture of high melting point PET fibers and low melting point PET fibers);

(17) (PBT fiber nonwoven fabric): (PTFE porous film):(PET/PBT sheath-core structure nonwoven fabric);

(18) (low melting point PET fiber nonwoven fabric):(PTFE porous film): (low melting point PET fiber nonwoven fabric); and

(19) (high melting point PET fiber nonwoven fabric): (PTFE porous film): (high melting point PET fiber nonwoven fabric).

In the above-noted adhering method using a heat roller, pressure is not directly added, nor is the laminated body pinched in its thickness direction as in a pinch roll method or as described in Japanese Patent Application Tokkai Hei 6-218899. The heat roller may have a mirror surface, or an embossed surface. The roller temperature is e.g., the softening point of a low melting point PET or PBT or above, and is below the melting point of a high melting point PET.

A hot-melt adhesive is preferably used for adhering PET nonwoven fabrics - nonwoven fabrics made of fibers such as high melting point PET fibers, low melting point PET fibers, mixed fibers of high melting point PET fibers and low melting point PET fibers, and nonwoven fabrics made of high melting point PET/low melting point sheath-core fibers.

In order to maintain the permeability of an air permeable supporting material, adhering methods include the spray coating method, spiral spray coating method, slot spray coating method, melt blown coating method, print wheel coating method, ribbon rip coating method, etc. A method of applying a hot-melt adhesive is particularly preferable since it prevents the generation of organic materials and is economical.

The filter element of this invention is in a pleated form, and is made of a filter medium from which 3ng or less as a maximum amount of organic materials is detected per gram of the filter medium.

The pleated filter element is also made of a filter medium which has an air permeable supporting material on at least one surface of a polytetrafluoroethylene porous film, and the total amount of organic materials detected from the air permeable supporting material at 80°C (by the analytical method defined below) is 1000ng or less per 250mg of the air permeable supporting material.

Furthermore, the pleated filter element is made of a filter medium that has an air permeable supporting material on at least one surface of a polytetrafluoroethylene porous film, and the air permeable supporting material has a high temperature pressure endurance of 0-15.0, which is measured by the method defined below.

In addition, the pleated filter element is made of a filter medium which has an air permeable supporting material on at least one surface of a polytetrafluoroethylene porous film, and the air permeable supporting material is essentially made of at least one material selected from the group consisting of polyester and polyamide.

The air filter unit of this invention contains an air filter medium which has an air permeable supporting material on at least one surface of a polytetrafluoroethylene (PTFE) porous film; the filter medium is bent in a wave form and is in a supporting body (frame) with the periphery sealed. The maximum amount of organic materials detected from the filter medium is 3ng or less, more preferably 2ng or less, or further preferably 1ng or less, per gram of the filter medium.

Also, the air filter unit of this invention contains an air filter medium which has an air permeable supporting material on at least one surface of a polytetrafluoroethylene (PTFE) porous film; the filter medium is bent in a wave form and is in a supporting body (frame) with the periphery sealed. The total amount of organic materials detected from the air permeable supporting material at 80°C (by the analytical method defined below) is 1000ng or less per 250mg of the air permeable supporting material.

In addition, the air filter unit of this invention contains an air filter medium which has an air permeable supporting material on at least one surface of a polytetrafluoroethylene (PTFE) porous film; the filter medium is bent in a wave form and is in a supporting body (frame) with the periphery sealed. The air permeable supporting material has high temperature pressure endurance of 0-15.0, which is measured by the method defined below.

Furthermore, the air filter unit of this invention contains an air filter medium which has an air permeable supporting material on at least one surface of a polytetrafluoroethylene (PTFE) porous film; the filter medium is bent in a wave form and is in a supporting body (frame) with the periphery sealed. The air permeable supporting material is essentially made of at least one material selected from the group consisting of polyester and polyamide.

It is preferable that mini-pleated filter elements, having a band- or ribbon-shaped spacer made of a hot melt adhesive, are kept in the air filter unit. If the air filter unit has this mini-pleated form, it is compact and the entire area of the filter would be utilized efficiently. Since the filter unit can limit the generation of organic materials, it can be preferably used for electronic devices such as semiconductors and liquid crystals.

In the air filter unit, a sealing section of the supporting body (frame) and the filter medium is sealed with a hot-melt adhesive. With the use of the hot-melt adhesive, the generation of organic materials is reduced to a low level.

As described above, this invention can provide a filter generating few organic materials. A filter with excellent flame-resistant properties can be provided by applying a flame-resistant nonwoven fabric.

This invention is explained below in further detail by referring to drawings.

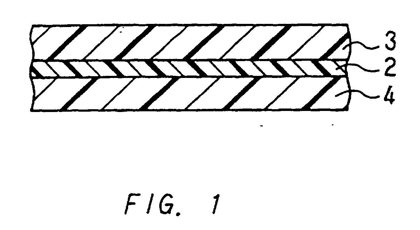

Fig. 1 is a cross-sectional view of a filter medium of one embodiment of the invention. In Fig. 1, 1 indicates a filter medium; 2 is a 4 $\mu$m thick PTFE layer having 2g/m$^2$ basis weight; and 3 and 4 are polyester long-fiber span bond nonwoven cloths (for example, a nonwoven cloth manufactured by Toyobo Co., Ltd.; size (single fiber thickness): 2 denier; and 15-100g/m$^2$ basis weght, more preferably 20-70g/m$^2$ basis weght). 1-20g/m$^2$, more preferably 2-10g/m$^2$, of a polyester-based hot-melt adhesive (e.g., Diabond (trademark)) is coated so as to adhere PTFE layer 2 to flame-resistant span bond nonwoven cloth layers 3 and 4, and is then melted and adhered by heat at 160-200°C. The entire thickness of filter medium 1 is 100-1,500 $\mu$m, more preferably 100-70 $\mu$m. Filter medium 1 preferably has 10-100mmH$_2$O (at 5.3cm/sec) pressure loss, 99.0% or more particle collection efficiency (at 5.3cm/sec, 0.1 $\mu$m) of DOP having 0.10-0.12 $\mu$m particle diameter, and 0.2-3 $\mu$m pore diameter.

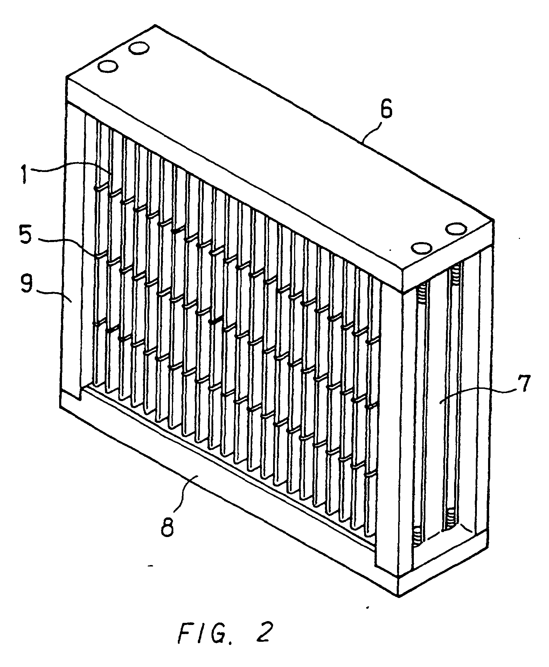

Fig. 2 is a perspective view of an air filter unit of one embodiment of the invention. In the figure, 1 indicates the filter medium mentioned above, 5 is a band- or ribbon-shaped spacer made of a hot-melt adhesive (for example Diabond (trademark)), and 6-9 are frames. Filter medium 1 is folded up at about 40mm width. When the filter medium is seen from the front, around 2mm wide gaps (gaps between the peaks) are formed by spacer 5. Gaps between the rows of spacer 5 are preferably around 10-50mm, more preferably about 25mm. The periphery of filter medium 1 and the inside surface of frames 6-9 are sealed with a hot melt adhesive (e.g., Diabond) so as to prevent air leakage.

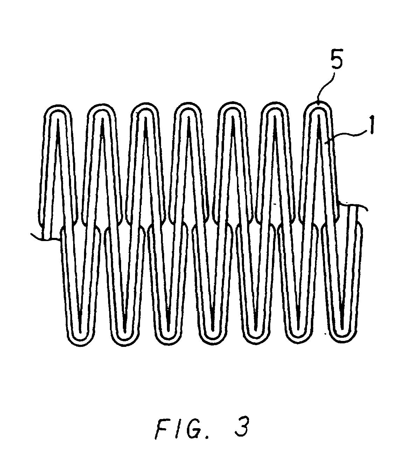

Fig. 3 shows a cross section of spacer 5 shown in Fig. 2. Spacer 5 is adhered over a length around 20mm from the outside toward the center of filter medium 1. The thickness of spacer 5 is about 1mm. Due to spacer 5, air can uniformly permeate through filter medium 1.

The invention is explained below in further detail by referring to examples. In the following examples, pressure loss, permeability, scavenging efficiency, and amount of detected organic materials, total organic carbons (TOC), High Temperature Pressure Endurance Testing Method of an Air Permeable Supporting Material, and Standard of Test

# EP 0 917 902 B1

Method for Combustion of Air Filter Media (JACA No. 11-1977) are measured by the following methods.

## (I) Pressure loss measuring method

A sample was cut into a circle having 47mm diameter, and was then set on a holder having a 12.6cm$^2$ permeation effective area. Pressure loss was measured at 5.3cm/sec air velocity.

## (II) Permeability

A sample was set on a holder having 100mm diameter, and the flow of air permeating through the sample was set at 5.3cm/sec. In this condition, highly dispersed DOP (dioctylphthalate) particles at a concentration of $10^7$/300ml were introduced upstream of the sample. The number of particles having 0.1 μm particle diameter was counted at the upstream and downstream sides of the sample by a particle counter (LAS-X-CRT by PMS Co., Ltd.), and the permeability (%) of particles was found from the ratio.

## (III) Particle collection efficiency (%)

$$\text{Particle collection efficiency (\%)} = 100 - \text{Penetration efficiency (\%)}$$

## (IV) Measurement of organic materials of filter medium

A filter medium sample was weighed (1.0-5.0g, more preferably 1.5-3.0g), and was sealed in a glass container. The filter medium was then cleaned at room temperature (25°C) by permeating pure air (AIR-Zero-A manufactured by Sumitomo Seika Chemicals Co., Ltd.) at 0.1 liter/min for 24 hours. An activated carbon tube (8015 manufactured by Shibata Chemical Equipment Co., Ltd.; 200mg activated carbon; 20-40 mesh) was placed at the gas outlet section of the glass container. At room temperature, pure air was permeated at 0.1liter/min for 24 hours, and off gas was trapped. After the trapping, the activated carbon was extracted using 1 mililiter carbon disulfide as a desorption solvent, and the organic materials of the solution were detected by a gas chromatograph mass spectrometer (GC-MS). The GC-MS (QP-1000) is manufactured by Shimadzu Corp, and the separation column was 1m of OV-1 (1%). In order to detect all the organic gas, the oven of the GC-MS was kept at 50°C for five minutes, and was raised to 250°C at 10°C/min and thenkept there for two minutes and thirty seconds.

The information on a detected organic material was taken every second for analysis. In this invention, however, the identification accuracy of organic materials was not a concern, but the amount of the materials detected above the allowable limit was important.

The amount of detected organic materials is measured according to a working curve of toluene. Thus, the detected value of organic materials per gram of a filter medium was measured from value/sample value (g). In the above-noted measurement method, the allowable detection limit from a blank test condition was 1ng.

## (V) Method of measuring the total organic carbons (TOC) of an air permeable supporting material

TOC is measured by a purge and trap method applying gas chromatography. First, an air permeable supporting material was cut into 6cmx6cm by scissors which were washed throughly with acetone, and the cut material was again cut into 5mm squares so as to prepare a sample. The sample was placed in a sample tube which had been kept at 80°C, and was washed by the flow of pure helium gas at 80°C at 80°C/min. flow for sixty minutes. This condition was established, since the upper limit of the operating temperature of the air filter unit is generally 80°C.

Under the same condition, the gas was again allowed to flow for fifteen minutes. Volatile constituents generated from the sample were taken out from the sample tube (purge), and were then introduced to a trap tube. The volatile constituents were accumulated and condensed on an absorbent (quartz wool) which had been cooled to -40°C in the trap tube. Then, the absorbant was immediately heated to 314°C, and the materials on the absorbant were released as gas after twenty seconds. The released gas was introduced to gas chromatography, and the amount of TOC was measured. The measuring conditions are as follows:

Gas chromatography: GC14A manufactured by Shimadzu Corp.;
Column: FRONTIER LAB Ultra Alloy Capillary Column, UA-5;
Column Temperature: 50°C→250°C (10 minutes); Programming rate 10°C/minute; and

Split Ratio: 1:50 (Column flow 10ml/minute).

(VI) High Temperature Pressure Endurance Testing Method of an Air Permeable Supporting Material

Each air permeable supporting material was cut into 20cmx20cm squares, thus preparing samples. The sample was sandwiched with a polyimide film having the same size as the sample (125 μm thick APICAL manufactured by KANEKA Corporation), and was also sandwiched with a 3mm thick fluorine rubber sheet which uniformly applies pressure to the sample and has heat-resistance.

The sample was then set on a heat press device (DA050 manufactured by MATSUDA SEISAKU Co., Ltd.), and was pressed at 25kg/cm pressure and 180°C for thirty seconds.

High temperature pressure endurance is calculated from the following equation;

$$\text{High temperature pressure endurance (mmH}_2\text{O/basis weight)} = \text{pressure loss}$$

$$\text{after the press/nonwoven fabric basis weight (g/m}^2) \times 100.$$

The pressure loss after the press is measured at 5.3cm/s air velocity applied to an area having a diameter of 110mm($95cm^2$) at the center portion of the test sample.

(VII) Standard of Test Method for Combustion of Air Filter Media (JACA No. 11-1977)

1. Application

This test method prescribes the standard of test method for combustion of air filter media applied for air cleaners.

2. Specimen

    (1) Size: 250mm $\times$ 250mm
    (2) Quantity: five specimens

3. Extraction of Specimen

The extraction of specimens is carried out by simply removing a specimen of the required size from a targeted object.

4. Preceding Treatment of Specimen

Before the test is carried out, a specimen is kept in a constant-temperature drying oven at 50±2°C for twenty-four hours. However, if the specimen is unaffected by this heat, it could be left in a constant-temperature drying oven at 105±2°C for one hour, instead. Then, the specimen is left in a desiccator containing silica gel for one hour.

5. Testing Device

(1) Supporting Frame 11

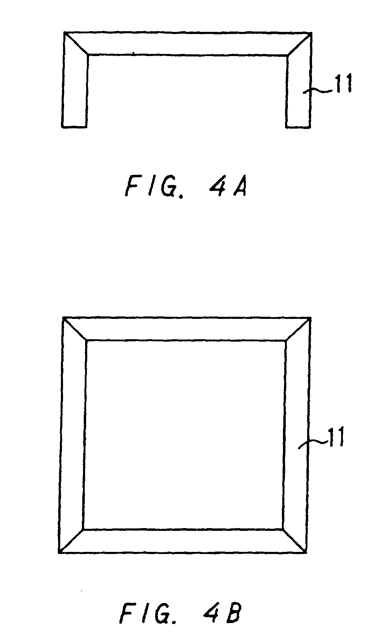

A 250mm (inner side: 200mm) $\times$ 250mm (inner side: 200mm) metallic square shown in Fig. 4A (a front view) and Fig. 4B (a plan view) with 100mm leg length is used for supporting a specimen and providing sufficient permeability.

(2) Wire Gauze 12

A circumferentially reinforced 250mm $\times$ 250mm 20 mesh (standarized by JIS G 3555 woven wire gauze) is used.

(3) Metal Frame 14

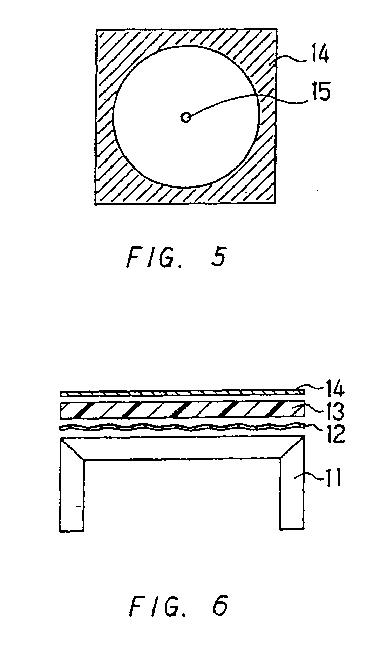

A 250mm × 250mm square metallic plate shown in Fig. 5 (with 1.6mm or more thickness) having a circular hole of 200mm diameter at its center and having enough weight to hold the specimen onto the wire gauze 12 is used.

(4) Heat Source

Hexamethylenetetramine (0.15g; 6.4mm diameter; and 4.3mm thickness).

(5) Scale

1mm scale.

6. Testing Process

(1) Each specimen is removed from the desiccator. After placing the wire gauze 12 on the supporting frame 11 as shown in Fig. 6, the specimen 13 is placed on the gauze 12. The metal frame 14 is also placed over the specimen 13, and the circumference of the specimen is pressed 14. The heat source is then placed on the center 15 of the specimen 13, and is ignited by a match.

Combustion conditions are examined, and the maximum length of a carbonized section along the central line of the specimen is measured, thus measuring the average values of five specimens.

7. Evaluation

(1) Flame-resistant filter media are those with 150mm or less maximum carbonized length. When the tests are carried out on both front and back surfaces of the specimen, the longer maximum carbonized length is evaluated.
(2) The following conditions are recorded:

(a) when particularly unusual combustion conditions are found from five specimens.
(b) when the heat source is maintained.

A PTFE porous film was manufactured based on the method described in WO94/16802. More specifically, a paste of PTFE fine powder (POLYFLON FINE POWDER manufactured by Daikin Industries, Ltd.) and an extrusion assistant is pushed out and pressed so as to prepare a 100 μm thick film. After the film was stretched ten times in a longitudinal direction at 300°C and twenty times in a width direction at 200°C, a PTFE porous film was prepared which had 5 μm thickness, 0.35 μm average pore diameter, 42mmH$_2$O pressure loss, 0.0000027% permeability, and 99.9999973% particle collection efficiency.

EXAMPLE 1

A polyester-based hot-melt adhesive (Diabond DH598B manufactured by Nogawa Chemical Co., Ltd.) was applied at 6g/m$^2$ ratio by using a ribbon coater head (manufactured by ITW Dynatec) onto at least one surface of layers 3 and 4 which are polyester long-fiber span bond unwoven cloths (6602B manufactured by Toyobo Co., Ltd.; size: 2 denier; basis weight: 60g/m$^2$).

As a PTFE layer 2, a PTFE porous film was used. After laminating three layers 2, 3 and 4, they were melted and adhered to each other into one body by a heat roller at 180°C and 10m/m line speed, thus providing a filter medium 1 with 0.35 μm average pore diameter, 42mmH$_2$O pressure loss, 0.0000027% penetration efficiency, and 99.9999973% particle collection efficiency.

The filter medium (3.0g) was sealed in a glass container, and the detected organic materials were measured by the above-noted measurement method. According to the result, the detected amount was below the allowable limit (1ng) per gram of the filter medium (See Fig. 4A).

EXAMPLE 2

A filter medium the same as in Example 1 was prepared, except that polyester filaments span bond nonwoven fabric in which a flame retardant is copolymerized (H6301B manufactured by Toyobo Co., Ltd.; size: 2 denier; basis weight: 30g/m$^2$) was used as layers 3 and 4.

The amount of detected organic materials per two grams of the filter medium was measured as in Example 1. According to the result, the detected amount was below the allowable limit (1ng) per gram of the filter medium (Fig. 4B).

A combustibility test (JACA No. 11-1977) was carried out on the filter medium, and the medium which had 110mm maximum carbonized length satisfied the standards as a flame-resistant medium.

COMPARATIVE EXAMPLE 1

A layer 3 was filament span bond nonwoven fabric (ELEVES T0703WDO manufactured by Unitika Ltd.; size: 3 denier; basis weight; 70g/m$^2$) having a core/sheath structure and comprising polyethylene and polyester. Polyethylene was used for the sheath section of a layer 4. The core of layer 4 was a two-layer span bond nonwoven cloth (ELLEFIT E0303WTO manufactured by Unitika Ltd.; size: 3 denier; basis weight; 30g/m$^2$) comprising two kinds of fibers - a core/sheath structured conjugated fiber having a polyester core section and a core/sheath structured conjugated fiber having a modified polyester sheath section and a polyester core section.

A PTFE porous film was used as a PTFE layer 2. Three layers 2, 3 and 4 were laminated, and were adhered to each other into one body by a heat roller at 200°C and 10m/min line speed, thus preparing a filter medium.

As in Example 1, the organic materials per three grams of the filter medium were detected and then measured. Per gram of the filter medium, organic materials such as dodecane (3ng), tridecane (4ng), etc. were detected (Fig. 4C). In Fig. 4C, a peak at 951 seconds indicates dodecane; a peak at 1050 seconds belongs to tridecane; a peak at 1143 seconds indicates tetradecane; and a peak at 1228 seconds indicates pentadecane. The maximum carbonized length was above 200mm.

COMPARATIVE EXAMPLE 2

The amount of detected organic materials per 1.5g of a polypropylene electret filter medium (ELITRON manufactured by Toyobo Co., Ltd.) was measured as in Example 1. Per gram of the filter medium, organic materials such as dodecane (4ng) and tridecane (7ng) were detected (Fig. 4D).

In Fig. 4D, a peak at 951 seconds belongs to dodecane; a peak at 1050 seconds indicates tridecane; a peak at 1143 seconds belongs to tetradecane; and a peak at 1228 seconds indicates pentadecane.

EXAMPLE 3

After laminating PET/PBT sheath-core structure filament span bond nonwoven fabric (BULCOMPO (HP6060G) manufactured by Toyobo Co., Ltd.; size: 8 denier; basis weight: 60g/m$^2$) onto both surfaces of a PTFE porous film, the layers are melted and adhered (laminated) into one body by a heat roller at 250°C and 10m/minute line speed, thus providing a filter medium having 45mmH$_2$O pressure loss and 99.99999% particle collection efficiency. The filter medium (3.0g) was sealed in a glass container, and the amount of detected organic materials was measured according to the above-mentioned measurement method. According to the result, the amount was less than the allowable limit (1ng) per gram of the filter medim.

EXAMPLE 4

After laminating filament span bond nonwoven fabric made of low melting point PET/high melting point PET fibers (MARIX manufactured by Unitika Ltd.; size: 2 denier; basis weight: 50g/m$^2$) onto both surfaces of a PTFE porous film, the layers were melted and adhered into one body by a heat roller at 250°C and 10m/minute line speed, thus providing a filter medium having 44mmH$_2$O pressure loss and 99.999994% particle collection efficiency. The filter medium (3.0g) was sealed in a glass container, and the amount of detected organic materials was measured according to the above-mentioned measurement method. According to the result, the amount was less than the allowable limit (1ng) per gram of the filter medim.

EXAMPLES 5-10, COMPARATIVE EXAMPLES 3-6

The films used in Examples 1-4 were drawn 12 times in a longitudinal direction at 300°C and 25 times in a width direction at 200°C, thus preparing 3 μm thick PTFE porous films with 0.42 μm average pore diameter, 30mmH$_2$O pressure loss and 99.9995% particle collection efficiency. No TOC was detected from these PTFE porous films.

EXAMPLE 5

As layers 3 and 4, a polyester-based hot-melt adhesive (Diabond DH598B manufactured by Nogawa Chemical Co., Ltd.) was coated at 6g/m$^2$ on one surface of an air permeable supporting material A (PET long- fiber nonwoven cloth (ECULE 6602B manufactured by Toyobo Co., Ltd.; size: 2 denier; basis weight: 60g/m$^2$; melting point: 265°C).
A PTFE porous layer 2 and layers 3 and 4 were laminated, and then melted and adhered into one body by a heat roller at 180°C and 10m/min. line speed. As a result, a filter medium was prepared which had 31mmH$_2$O pressure loss and 99.9995% particle collection efficiency.

EXAMPLE 6

As layers 3 and 4, a polyester-based hot-melt adhesive (Diabond DH598B manufactured by Nogawa Chemical Co., Ltd.) was coated at 6g/m$^2$ on one surface of an air permeable supporting material B (PET long-fiber nonwoven cloth (HEIM H6301B manufactured by Toyobo Co., Ltd.; size: 2 denier; basis weight: 30g/m$^2$; melting point: 250°C).
A PTFE porous layer 2 and layers 3 and 4 were laminated, and then melted and adhered into one body by a heat roller at 180°C and 10m/min. line speed. As a result, a filter medium was prepared which had 28mmH$_2$O pressure loss and 99.9993% particle collection efficiency.

EXAMPLE 7

As layers 3 and 4, air permeable supporting materials C (PET/PBT core/sheath filaments nonwoven fabric (BULCOMPO HP6060G manufactured by Toyobo Co., Ltd.; size: 8 denier; basis weight: 60g/m$^2$; melting point: 265°C (PET) and 216°C (PBT)) were laminated, and were melted and adhered into one body by a heat roller at 10m/min. line speed and 220°C. As a result, a filter medium was prepared which had 30mmH$_2$O pressure loss and 99.9999% particle collection efficiency.

EXAMPLE 8

As layers 3 and 4, air permeable supporting materials D (PET/low melting point PET mix spun filament nonwoven fabric (MARIX 90703WSO manufactured by Unitika Ltd.; size: 2 denier; basis weight: 70g/m$^2$; melting point: 264°C (PET); low melting point: 238°C (PET)) were laminated, and were melted and adhered into one body by a heat roller at 10m/min. line speed and 240°C. As a result, a filter medium was prepared which had 33mmH$_2$O pressure loss and 99.99995% particle collection efficiency.

EXAMPLE 9

As layers 3 and 4, a polyester-based hot-melt adhesive (Diabond DH598B manufactured by Nogawa Chemical Co., Ltd.) was coated at 6g/m$^2$ on one surface of an air permeable supporting material E (polyamide long-fiber nonwoven cloth (ELTAS NO1050 manufactured by Asahi Chemical Industry Co., Ltd.; size: 2 denier; bases weight: 50g/m$^2$; melting point: 223°C)).
A PTFE porous layer 2 and layers 3 and 4 were laminated, and then melted and adhered into one body by a heat roller at 180°C and 10m/min. line speed. As a result, a filter medium was prepared which had 28mmH$_2$O pressure loss and 99.9993% particle collection efficiency.

EXAMPLE 10

As layers 3 and 4, air permeable supporting materials F (PET/low melting point PET core/sheath filaments nonwoven fabric (G5040 manufactured by Toray Industries, Inc.; size: 2 denier; basis weight: 40g/m$^2$; melting point: 264°C (PET); low melting point: 234°C (PET)) were laminated, and were melted and adhered into one body by a heat roller at 10m/min. line speed and 240°C. As a result, a filter medium was prepared which had 29mmH$_2$O pressure loss and 99.9998% particle collection efficiency.

COMPARATIVE EXAMPLE 3

As layers 3 and 4, a polyester-based hot-melt adhesive (Diabond DH598B manufactured by Nogawa Chemical Co., Ltd.) was coated at 6g/m$^2$ on one surface of an air permeable supporting material G (PET/wet short fiber nonwoven cloth (manufactured by INO-PAPER; size: 2 denier; basis weight: 20g/m$^2$; melting point: 260°C (PET)).

A PTFE porous film 2 and layers 3 and 4 were laminated, and were melted and adhered into one body by a heat roller at 10m/min. line speed and 180°C. As a result, a filter medium was prepared which had 35mmH$_2$O pressure loss and 99.9999% particle collection efficiency.

COMPARATIVE EXAMPLE 4

As layers 3 and 4, air permeable supporting materials H (PET/ PE core/sheath filaments nonwoven fabric (ELPES T0703WDO manufactured by Unitika Ltd.; size: 3 denier; basis weight: 70g/m$^2$; melting point: 264°C (PET) and 130°C (PE)) were laminated, and were melted and adhered into one body by a heat roller at 10m/min. line speed and 200°C. As a result, a filter medium was prepared which had 35mmH$_2$O pressure loss and 99.9998% particle collection efficiency.

COMPARATIVE EXAMPLE 5

As layers 3 and 4, a polyester-based hot-melt adhesive (Diabond DH598B manufactured by Nogawa Chemical Co., Ltd.) was coated at 6g/m$^2$ on one surface of an air permeable supporting material I (PP long fiber nonwoven cloth (TORAY MICRON manufactured by Toray Industries, Inc.; size: 2 denier; basis weight: 50g/m$^2$; melting point: 165°C).

A PTFE porous film 2 and layers 3 and 4 were laminated, and were melted and adhered into one body by a heat roller at 10m/min. line speed and 180°C. As a result, a filter medium was prepared which had 55mmH$_2$O pressure loss and 99.9999% particle collection efficiency.

COMPARATIVE EXAMPLE 6

As layers 3 and 4, air permeable supporting materials J (hot-melt PET nonwoven fabric (including additive agents) (G0030 manufactured by Toyobo Co., Ltd.; basis weight: 30g/m$^2$; melting point: 113°C) were laminated, and were melted and adhered into one body by a heat roller at 15m/min. line speed and 80°C. As a result, a filter medium was prepared which had 40mmH$_2$O pressure loss and 99.9999% particle collection efficiency.

The TOC and the high temperature pressure endurance of air permeable supporting materials A-J were measured. The results are shown in the following Table 1.

Table 1

|  | Air Permeable Supporting Material | TOC Amount (ng/250mg) | High Temperature Pressure Endurance (mmH$_2$O/ Basis weight) |
|---|---|---|---|
| Ex. 5 | A | 112 | 3.8 |
| Ex. 6 | B | 37 | 1.3 |
| Ex. 7 | C | 14 | 0.2 |
| Ex. 8 | D | 69 | 1.0 |
| Ex. 9 | E | 684 | 8.5 |
| Ex. 10 | F | 100 | 3.3 |
| Comp. Ex. 3 | G | 1150 | 16.0 |
| Comp. Ex. 4 | H | 1215 | 25.1 |
| Comp. Ex. 5 | I | 6401 | 350 |
| Comp. Ex. 6 | J | 13981 | Unmeasurable |

As clearly seen from this table, the filter media of this invention generated little TOC, and an efficient and reasonable filter media and the air filter unit using the said filter media (including pleated filter elements) were obtained.

Industrial Applicability

As clearly shown in the above-mentioned examples and comparative examples, the maximum amount of organic materials detected from the filter medium of this invention is 3ng or less per gram of the filter medium. Therefore, a highly efficient filter medium and an air filter unit using the same are provided.

**Claims**

1. A filter medium comprising a polytetrafluoroethylene porous film which comprises an air permeable supporting material on at least one surface, **characterized in that** a maximum amount of organic materials detected from said filter medium is 3 ng or less per gram of said filter medium, wherein the air permeable supporting material does not comprise polyolefin, and wherein the PTFE porous film has 10 to 100 mmH$_2$O pressure loss when air is permeated at a flow velocity of 5.3 cm/s and 99.0% or more particle collection efficiency of 0.10 to 0.12 μm dioctylphthalate (DOP).

2. A filter medium comprising a polytetrafluoroethylene porous film which comprises an air permeable supporting material on at least one surface, **characterized in that** a total amount of organic materials detected from the air permeable supporting material at 80°C is 1000 ng or less per 250 mg of said air permeable supporting material, wherein the air permeable supporting material does not comprise polyolefin, and wherein the PTFE porous film has 10 to 100 mmH$_2$O pressure loss when air is permeated at a flow velocity of 5.3 cm/s and 99.0% or more particle collection efficiency of 0.10 to 0.12 μm dioctylphthalate (DOP).

3. The filter medium according to claim 2, wherein a total amount of organic materials detected from the air permeable supporting material at 80°C is 500 ng or less per 250 mg of said air permeable supporting material.

4. The filter medium according to claim 2, wherein a total amount of organic materials detected from the air permeable supporting material at 80°C is 150 ng or less per 250 mg of said air permeable supporting material.

5. The filter medium according to claim 2, wherein the air permeable supporting material is essentially made of at least one material selected from the group consisting of polyester and polyamide.

6. The filter medium according to claim 5, wherein the permeable supporting material essentially comprises polyester and no polyolefin.

7. The filter medium according to claim 5, wherein the polyester material is at least one polymer selected from the group consisting of polyethylene terephthalate and polybutylene terephthalate.

8. The filter medium according to claim 5, wherein the polyester material is a nonwoven fabric made of polyester fibers.

9. The filter medium according to claim 8, wherein the nonwoven fabric is filaments nonwoven fabric.

10. The filter medium according to claim 9, wherein the filaments nonwoven fabric is a span bond nonwoven fabric.

11. The filter medium according to claim 2, wherein the air permeable supporting material has a high temperature pressure endurance of 0-15.0.

12. The filter medium according to claim 11, wherein the high temperature pressure endurance is 0-5.0.

13. A filter medium comprising an air permeable supporting material on at least one surface of a polytetrafluoroethylene porous film; **characterized in that** said air permeable supporting material has a high temperature pressure endurance of 0-15.0, wherein the air permeable supporting material does not comprise polyolefin, and wherein the PTFE porous film has 10 to 100 mmH$_2$O pressure loss when air is permeated at a flow velocity of 5.3 cm/s and 99.0% or more particle collection efficiency of 0.10 to 0.12 μm dioctylphthalate (DOP).

14. The filter medium according to claim 13, wherein the high temperature pressure endurance is 0-8.0.

15. The filter medium according to claim 14, wherein the high temperature pressure endurance is 0-5.0.

16. A filter medium comprising an air permeable supporting material on at least one surface of a polytetrafluoroethylene porous film; **characterized in that** said air permeable supporting material is essentially made of at least one material selected from the group consisting of polyester and polyamide, wherein the air permeable supporting material does not comprise polyolefin, and wherein the PTFE porous film has 10 to 100 mmH$_2$O pressure loss when air is permeated at a flow velocity of 5.3 cm/s and 99.0% or more particle collection efficiency of 0.10 to 0.12 μm dioctylphthalate (DOP).

17. The filter medium according to claim 16, wherein the at least one material is at least one polymer selected from the group consisting of polyethylene terephthalate and polybutylene terephthalate.

18. The filter medium according to claim 16 having a high temperature pressure endurance of 0-15.0.

19. The filter medium according to claim 18, wherein the polytetrafluoroethylene porous film is provided with an air permeable supporting material on both surfaces.

20. A pleated filter element comprising the filter medium of claims 1, 2, 13 or 19.

21. An air filter unit comprising a filter medium which comprises an air permeable supporting material on at least one surface of a polytetrafluoroethylene (PTFE) porous film; wherein said filter medium is bent in a wave form and is in a supporting body (frame), and a periphery of the filter medium is sealed; and wherein said filter medium is the filter medium of claims 1, 2, 13 or 19.


**Patentansprüche**

1. Filtermedium, umfassend eine poröse Polytetrafluorethylenfolie, umfassend ein luftdurchlässiges Trägermaterial auf zumindest einer Oberfläche, **dadurch gekennzeichnet, daß** eine maximale Menge an organischen Materialien, die von besagtem Filtermedium detektiert wird, 3 ng oder weniger pro Gramm des besagten Filtermediums beträgt, worin das luftdurchlässige Trägermaterial nicht Polyolefin umfaßt und worin die poröse PTFE-Folie einen Druckverlust von 10 bis 100 mmH$_2$O aufweist, wenn Luft mit einer Strömungsgeschwindigkeit von 5,3 cm/s durchgeleitet wird, und einer Partikelsammeleffizienz von 99,0 % oder mehr bezüglich Dioctylphthalat (DOP) mit 0,10 bis 0,12 μm.

2. Filtermedium, umfassend eine poröse Polytetrafluorethylenfolie, umfassend ein luftdurchlässiges Trägermaterial auf zumindest einer Oberfläche, **dadurch gekennzeichnet, daß** die Gesamtmenge an von dem luftdurchlässigen Trägermaterial detektierten organischen Materialien bei 80°C 1.000 ng oder weniger pro 250 mg des besagten luftdurchlässigen Trägermaterials beträgt, worin das luftdurchlässige Trägermaterial kein Polyolefin umfaßt, und worin die poröse PTFE-Folie einen Druckverlust von 10 bis 100 mmH$_2$O aufweist, wenn Luft mit einer Strömungsgeschwindigkeit von 5,3 cm/s durchgeleitet wird, und einer Partikelsammeleffizienz von 99,0 % oder mehr bei Dioctylphthalat (DOP) von 0,10 bis 0,12 μm.

3. Filtermedium gemäß Anspruch 2, worin die Gesamtmenge an von dem luftdurchlässigen Trägermaterial detektierten organischen Materialien bei 80°C 500 ng oder weniger pro 250 mg des besagten luftdurchlässigen Trägermaterials beträgt.

4. Filtermedium gemäß Anspruch 2, worin die Gesamtmenge an von dem luftdurchlässigen Trägermaterial detektierten organischen Materialien bei 80°C 150 ng oder weniger pro 250 mg des besagten luftdurchlässigen Trägermaterials beträgt.

5. Filtermedium gemäß Anspruch 2, worin das luftdurchlässige Trägermaterial im wesentlichen aus zumindest einem Material ausgewählt aus der Gruppe bestehend aus Polyester und Polyamid gebildet ist.

6. Filtermedium gemäß Anspruch 5, worin das permeable Trägermaterial im wesentlichen Polyester und kein Polyolefin umfaßt.

7. Filtermedium gemäß Anspruch 5, worin das Polyestermaterial zumindest ein Polymer ausgewählt aus der Gruppe bestehend aus Polyethylenterephthalat und Polybutylenterephthalat ist.

8. Filtermedium gemäß Anspruch 5, worin das Polyestermaterial ein aus Polyesterfasern gebildeter Vliesstoff ist.

9. Filtermedium gemäß Anspruch 8, worin der Vliesstoff ein Filamentvliesstoff ist.

10. Filtermedium gemäß Anspruch 9, worin der Filamentvliesstoff ein abstandsverbrückter ("span bond") Vliesstoff ist.

11. Filtermedium gemäß Anspruch 2, worin das luftdurchlässige Trägermaterial eine Hochtemperatur-Druckbeständigkeit von 0-15,0 aufweist.

**12.** Filtermedium gemäß Anspruch 11, worin die Hochtemperatur-Druckbeständigkeit 0-5,0 beträgt.

**13.** Filtermedium, umfassend ein luftdurchlässiges Trägermaterial auf zumindest einer Oberfläche einer porösen Polytetrafluorethylenfolie, **gekennzeichnet dadurch, daß** besagtes luftdurchlässiges Trägermaterial eine Hochtemperatur-Druckbeständiget von 0-15,0 aufweist, worin das luftdurchlässige Trägermaterial kein Polyolefin umfaßt, und worin die poröse PTFE-Folie einen Druckverlust von 10 bis 100 mmH$_2$O aufweist, wenn Luft mit einer Strömungsgeschwindigkeit von 5,3 cm/s durchgeleitet wird, und einer Partikelsammeleffizienz von 99,0 % oder mehr von Dioctylphthalat (DOP) von 0,10 bis 0,12 μm.

**14.** Filtermedium gemäß Anspruch 13, worin die Hochtemperatur-Druckbeständigkeit 0-8,0 ist.

**15.** Filtermedium gemäß Anspruch 14, worin die Hochtemperatur-Druckbeständigkeit 0-5,0 ist.

**16.** Filtermedium, umfassend ein luftdurchlässiges Trägermaterial auf zumindest einer Oberfläche einer porösen Polytetrafluorethylenfolie, **gekennzeichnet dadurch, daß** besagtes luftdurchlässiges Trägermaterial im wesentlichen aus zumindest einem Material ausgewählt aus der Gruppe bestehend aus Polyester und Polyamid gebildet ist, worin das luftdurchlässige Trägermaterial kein Polyolefin umfaßt, und worin die poröse PTFE-Folie einen Druckverlust von 10 bis 100 mmH$_2$O aufweist, wenn Luft mit einer Strömungsgeschwindigkeit von 5,3 cm/s durchgeleitet wird, und einer Partikelsammeleffizienz von 99,0 % oder mehr von Dioctylphthalat (DOP) von 0,10 bis 0,12 μm.

**17.** Filtermedium gemäß Anspruch 16, worin das zumindest eine Material zumindest ein Polymer ausgewählt aus der Gruppe bestehend aus Polyethylenterephthalat und Polybutylenterephthalat ist.

**18.** Filtermedium gemäß Anspruch 16 mit einer Hochtemperatur-Druckbeständigkeit von 0-15,0.

**19.** Filtermedium gemäß Anspruch 18, worin die poröse Polytetrafluorethylenfolie auf beiden Oberflächen mit einem luftdurchlässigen Trägermaterial versehen ist.

**20.** Gefaltetes Filterelement, umfassend das Filtermedium der Ansprüche 1, 2, 13 oder 19.

**21.** Luftfiltereinheit, umfassend ein Filtermedium, welches ein luftdurchlässiges Trägermaterial auf zumindest einer Oberfläche einer porösen Polytetrafluorethylenfolie (PTFE) umfaßt, worin besagtes Filtermedium in Wellenform gebogen ist und sich in einem Trägerkörper (Rahmen) befindet, und eine Peripherie des Filtermediums versiegelt ist, und worin besagtes Filtermedium das Filtermedium der Ansprüche 1, 2, 13 oder 19 ist.

**Revendications**

**1.** Milieu filtrant comprenant un film poreux de polytétrafluoroéthylène qui comprend un matériau de support perméable à l'air sur au moins une surface, **caractérisé en ce qu'**une quantité maximum de matériaux organiques détectés depuis ledit milieu filtrant est de 3 ng ou moins par gramme dudit milieu filtrant, dans lequel le matériau de support perméable à l'air ne comprend pas de polyoléfine, et dans lequel le film poreux de PTFE présente 10 à 100 mmH$_2$O de perte de pression lorsque de l'air pénètre à une vitesse d'écoulement de 5,3 cm/s et 99,0 % ou plus d'efficacité de collecte de particules de 0,10 à 0,12 μm de phtalate de dioctyle (DOP).

**2.** Milieu filtrant comprenant un film poreux de polytétrafluoroéthylène qui comprend un matériau de support perméable à l'air sur au moins une surface, **caractérisé en ce qu'**une quantité totale de matériaux organiques détectés depuis le matériau de support perméable à l'air à 80°C est de 1000 ng ou moins par 250 mg dudit matériau de support perméable à l'air, dans lequel le matériau de support perméable à l'air ne comprend pas de polyoléfine, et dans lequel le film poreux de PTFE présente 10 à 100 mmH$_2$O de perte de pression lorsque de l'air pénètre à une vitesse d'écoulement de 5,3 cm/s et 99,0 % ou plus d'efficacité de collecte de particules de 0,10 à 0,12 μm de phtalate de dioctyle (DOP).

**3.** Milieu filtrant selon la revendication 2, dans lequel une quantité totale de matériaux organiques détectés depuis le matériau de support perméable à l'air à 80°C est de 500 ng ou moins par 250 mg dudit matériau de support perméable à l'air.

**4.** Milieu filtrant selon la revendication 2, dans lequel une quantité totale de matériaux organiques détectés depuis le matériau de support perméable à l'air à 80°C est de 150 ng ou moins par 250 mg dudit matériau de support perméable à l'air.

**5.** Milieu filtrant selon la revendication 2, dans lequel le matériau de support perméable à l'air est essentiellement constitué d'au moins un matériau sélectionné parmi le groupe constitué de polyester et polyamide.

**6.** Milieu filtrant selon la revendication 5, dans lequel le matériau de support perméable à l'air comprend essentiellement du polyester et ne comprend pas de polyoléfine.

**7.** Milieu filtrant selon la revendication 5, dans lequel le matériau polyester est au moins un polymère sélectionné parmi le groupe constitué de poly(téréphtalate d'éthylène et de poly(téréphtalate de butylène).

**8.** Milieu filtrant selon la revendication 5, dans lequel le matériau polyester est un tissu nontissé constitué de fibres polyester.

**9.** Milieu filtrant selon la revendication 8, dans lequel le tissu nontissé est un tissu nontissé de filaments.

**10.** Milieu filtrant selon la revendication 9, dans lequel le tissu nontissé de filaments est un tissu nontissé lié en longueur.

**11.** Milieu filtrant selon la revendication 2, dans lequel le matériau de support perméable à l'air présente une endurance à la pression à haute température de 0 à 15,0.

**12.** Milieu filtrant selon la revendication 11, dans lequel l'endurance à la pression à haute température est de 0 à 5,0.

**13.** Milieu filtrant comprenant un matériau de support perméable à l'air sur au moins une surface d'un film poreux de polytétrafluoroéthylène ; **caractérisé en ce que** ledit matériau de support perméable à l'air présente une endurance à la pression à haute température de 0 à 15,0, dans lequel le matériau de support perméable à l'air ne comprend pas de polyoléfine, et dans lequel le film poreux de PTFE présente 10 à 100 mmH$_2$O de perte de pression lorsque de l'air pénètre à une vitesse d'écoulement de 5,3 cm/s et 99,0 % ou plus d'efficacité de collecte de particules de 0,10 à 0,12 μm de phtalate de dioctyle (DOP).

**14.** Milieu filtrant selon la revendication 13, dans lequel l'endurance à la pression à haute température est de 0 à 8,0.

**15.** Milieu filtrant selon la revendication 14, dans lequel l'endurance à la pression à haute température est de 0 à 5,0.

**16.** Milieu filtrant comprenant un matériau de support perméable à l'air sur au moins une surface d'un film poreux de polytétrafluoroéthylène ; **caractérisé en ce que** ledit matériau de support perméable à l'air est essentiellement constitué d'au moins un matériau sélectionné parmi le groupe constitué de polyester et polyamide, dans lequel le matériau de support perméable à l'air ne comprend pas de polyoléfine, et dans lequel le film poreux de PTFE présente 10 à 100 mmH$_2$O de perte de pression lorsque de l'air pénètre à une vitesse d'écoulement de 5,3 cm/s et 99,0 % ou plus d'efficacité de collecte de particules de 0,10 à 0,12 μm de phtalate de dioctyle (DOP).

**17.** Milieu filtrant selon la revendication 16, dans lequel le au moins un matériau est au moins un polymère sélectionné parmi le groupe constitué de poly(téréphtalate d'éthylène et de poly(téréphtalate de butylène).

**18.** Milieu filtrant selon la revendication 16 possédant une endurance à la pression à haute température de 0 à 15,0.

**19.** Milieu filtrant selon la revendication 18, dans lequel le film poreux de polytétrafluoroéthylène est doté d'un matériau de support perméable à l'air sur ses deux surfaces.

**20.** Élément de filtre plissé comprenant le milieu filtrant selon ies revendications 1, 2, 13 ou 19.

**21.** Unité de filtre à air comprenant un milieu filtrant qui comprend un matériau de support perméable à l'air sur au moins une surface d'un film poreux de polytétrafluoroéthylène (PTFE) ; dans lequel ledit milieu filtrant est plié en une forme ondulée et est dans un corps de support (cadre), et une périphérie du milieu filtrant est scellée, et dans lequel ledit milieu filtrant est le milieu filtrant selon les revendications 1, 2, 13 ou 19.

F I G. 1

FIG. 2

FIG. 3

FIG. 4A

FIG. 4B

FIG. 5

FIG. 6

## FIG. 7A

## FIG. 7B

## FIG. 7C

## FIG. 7D